(19) Europäisches Patentamt
European Patent Office
Office européen des brevets

(11) Publication number: 0 019 976 B1

(12) **EUROPEAN PATENT SPECIFICATION**

(45) Date of publication of patent specification: 08.12.82

(51) Int. Cl.³: G 02 F 1/01, G 02 F 1/17

(21) Application number: 80200478.8

(22) Date of filing: 22.05.80

(54) **Display device.**

(30) Priority: 31.05.79 NL 7904282

(43) Date of publication of application: 10.12.80 Bulletin 80/25

(45) Publication of the grant of the patent: 08.12.82 Bulletin 82/49

(84) Designated Contracting States: CH DE FR GB LI NL

(56) References cited:
US - A - 3 435 445
US - A - 3 716 290
US - A - 4 042 854

MICROELECTRONICS, vol. 7, no. 4, 1976 Luton GB A.G. FISCHER: "Flat TV panels with polycrystalline layers", pages 5—15

IBM TECHNICAL DISCLOSURE BULLETIN vol. 20, no. 7, December 1977 New York US D.S. MANSBRIDGE et al.: "Display electrode for electrochromic display", page 2845

(73) Proprietor: N.V. Philips' Gloeilampenfabrieken
Groenewoudseweg 1
NL-5621 BA Eindhoven (NL)

(72) Inventor: Van Zanten, Pieter
c/o Int. Octrooibureau B.V. Prof. Holstlaan 6
NL-5656 AA Eindhoven (NL)

(74) Representative: Zwaan, Andries Willem et al,
INTERNATIONAAL OCTROOIBUREAU B.V. Prof. Holstlaan 6
NL-5656 AA Eindhoven (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 019 976 B1

# Display device

The invention relates to a display device comprising a display medium between two supporting plates, of which one supporting plate has a matrix of display elements, a matrix of strip-shaped row electrodes and strip-shaped column electrodes insulated from each other at the crossings, which row electrodes and column electrodes are situated between the rows and columns of the matrix of display elements, a matrix of thin-film transistor circuits, in which each circuit is formed by a first transistor, a second transistor and a capacitor, of which first transistor the gate is connected to a strip-shaped row electrode, the drain is connected to a strip-shaped column electrode and the source is connected to the gate of the second transistor, of which second transistor the drain is connected to a display element, the gate is connected to a terminal of the capacitor and the source is connected to the other terminal of the capacitor, which source of the second transistor is furthermore connected to a power electrode, and the other supporting plate of which has a counter electrode which is common for all display elements.

The invention also relates to a device for driving such a display device.

Such a display device is disclosed in United States Patent Specification 4,042,854. In this specification an electroluminescent display device is described in which a thin-film transistor matrix (hereinafter abbreviated as TFT-matrix = *T*hin *F*ilm *T*ransistor matrix) is integrated in the display device. Each element of the TFT matrix comprises two transistors and a capacitor. In such an electroluminescent display device the rows of the matrix of picture elements are successively driven, all elements of a driven row being simultaneously provided with information. The transistors of the TFT matrix form the circuit elements which are necessary for addressing and providing the rows of a matrix of picture elements with information. An electroluminescent phosphor layer shows no memory effect so that the information which is presented during the driving of a row has to be stored during the time which is necessary to drive the remaining rows, the so-called frame time. The capacitors of the TFT-matrix serve to store the information. Writing of the picture elements occurs by applying a voltage across strip-shaped power electrodes extending parallel to the columns of picture elements and a counter electrode which is common for the picture elements. A result of the absence of memory effect of the electroluminescent phosphor layer is that the picture elements must be energized continuously. However, such a display device is not suitable for use with an electrochromic display medium instead of an electroluminescent display medium due to a number of essential differences between these two display media. In an electrochromic display device the display effect occurs as a result of a passage of current through the electrochromic material, the contrast being determined by the time duration and the value of the passage of the current. As a result of this it is not possible to energize driven picture elements during a frame time since this would cause contrast differences. However, an electrochromic material shows memory effect so that it is possible in principle to drive, to provide with information and to write line by line. In this case the capacitors and one transistor of each TFT circuit belonging to each picture element may be omitted. Writing individual lines, however, has disadvantages in that the strip-shaped electrodes for the power supply have a rather high resistance. The high current densities necessary for the electrochromic display effect in fact cause a considerable voltage drop across the strip-shaped power electrodes, which gives rise to contrast differences. Moreover, the energisation line by line has for its result that the overall time necessary for driving and exciting all lines becomes larger since for writing a current must be passed through the display medium for a given period of time.

It is therefore the object of the invention to provide a display device which is suitable for an electrochromic display medium, in which substantially no contrast differences occur, and in which a comparatively short period of time is necessary for writing the matrix of picture elements.

According to the invention, a display device of the kind mentioned in the opening paragraph is characterized in that the power electrode is formed by a conductive layer which is provided on one supporting plate and has an insulating layer and which is connected through apertures in the insulating layer to the source of the second transistor of each thin-film transistor circuit. By using one conductive layer as a power electrode the voltage drop across said electrode is considerably lower than the voltage drop across a strip-shaped energy electrode as a result of the strongly reduced resistance. Moreover, because no individual strips need be etched any longer, the common energy supply electrode may be made thicker. This has for its result that substantially no contrast differences occur any longer between written picture elements. The thickness of the conductive layer is preferably between approximately 0.1 $\mu$m and 4 $\mu$m. In an embodiment of a display device in accordance with the invention the conductive layer is of gold and the insulating layer is of aluminium oxide.

A display device in accordance with the invention is particularly suitable for use with an electrochromic material as a display medium

and especially a solution of a viologen salt. Displaying by means of a viologen salt as a display medium is based on a chemical reaction in which coloured contrast-rich pictures are obtained.

A suitable device for driving a display device in accordance with the invention, which device has first means to drive a row of picture elements, second means to provide a driven row of picture elements with information, third means to write the information and control means to energize the first, second and third means, is characterized in that the control means successively energize the first and second means for all rows of picture elements and then energize the third means for all the rows in common. In case the known display device is constructed with an electrochromic material and strip-shaped row power electrodes instead of column power electrodes and the rows of picture elements are driven, provided with information and written successively per row, then the overall time required for driving and writing the rows is $nxt_1 + nxt_2$, where $n$ is the number of rows of picture elements, $t_1$ is the time for driving a row and $t_2$ is the time for writing a row. Since the display device in accordance with the invention is constructed with one common power electrode, writing row by row is no longer possible since otherwise contrast differences occur. The rows of picture elements are now first driven successively and provided with information after which all rows are written simultaneously. The overall time for driving and writing in this case is $nxt_1 + t_2$. As a result of this, a considerable shortening of the writing time is produced as compared with the conventional way of driving, in particular for large matrices of picture elements. In addition, the simultaneous writing of all rows is in favour of the contrast because all picture elements are written simultaneously and for an equally long period of time.

The invention will be described in greater detail with reference to the accompanying drawing, in which

Fig. 1 is a diagrammatic sectional view of a display device according to the invention,

Fig. 2 shows diagrammatically the construction of the TFT circuit,

Fig. 3 shows a detail of a part of the display device shown in Fig. 1,

Fig. 4 is a block diagram of a device for driving a display device according to the invention.

Fig. 1 is a diagrammatic sectional view of a display device according to the invention. The display device 1 comprises two parallel glass supporting plates 2 and 3 which are kept spaced apart by sealing means 4 in the form of a frame with which the device 1 is also sealed. Provided on the supporting plate 2 are successively a common power electrode 6 of gold, an insulating layer 7 of aluminium oxide and a layer with TFT circuits and picture elements denoted diagrammatically by 9. *Via* apertures 8 in the insulating layer 7 the layer 9 is connected to the power electrode 6. A transparent counter electrode 10 of tin oxide is provided on the supporting plate 3. The display device 1 is filled with a diheptylviologendibromide which belongs to the group 4,4'-dipyridinium compounds (viologens). Viologens can generally be represented by the following chemical formula:

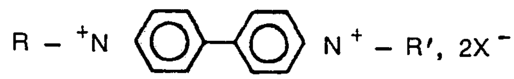

In a diheptylviologenbromide, $R = C_7H_{15}$ and $X^- = Br^-$. The display effect is based on a reduction oxidation reaction in which the reaction product is a coloured insoluble film. In principle the chemical reaction occurs as follows:

oxidation $Br + e \leftrightarrows Br^-$

reduction $A^{2+} + e \leftrightarrows A^{+o}$

$A^{+o} + Br^- \rightleftarrows ABr$

The precipitate of ABr has a purple colour. It is to be noted that viologens are known *per se* from the book "Non-emissive Electrooptic Displays" *pp,* 201—211. The operation of the picture display device will be described in detail with reference to Fig. 2, which shows diagrammatically the construction of the layer with TFT-circuits. The layer comprises a matrix of strip-shaped row electrodes 20 and strip-shaped column electrodes 21 which are insulated from each other at the crossings. The strip-shaped row electrodes 20 constitute the address electrodes and the strip-shaped column electrodes 21 constitute the information electrodes of the device. A TFT-circuit 23 and a picture element 24 are provided in each aperture of the matrix of row electrodes 20 and column electrodes 21. The TFT-circuits 23, the row electrodes 20 and the column electrodes 21 are covered with an insulating layer so that only the actual picture elements 24 are in direct contact with the electrochromic material 25. All picture elements 24 have a common power electrode and a common counter electrode which are shown diagrammatically by the circles 26 and 27, respectively.

Each TFT-circuit is formed by two transistors $T_1$, $T_2$ and a capacitor $C_S$. The gate 28 and the source 29 of $T_1$ are connected to a row electrode 20 and a column electrode 21, respectively. The drain 30 of $T_1$ is connected to the gate of $T_2$ and to the capacitor $C_S$. The source 32 of $T_2$ and the capacitor $C_S$ are connected to the earthed power electrode 26 which is common for all the picture elements 24. The drain 33 of $T_2$ is connected to a picture element 24.

The operation of the display device is as follows. If a row electrode 20 is driven with a positive voltage pulse, the transistors $T_1$, which are connected to the driven row electrode 20,

becomes conductive. This has for its result that the pulse-shaped information which is presented to the column electrodes 21 is stored in the capacitors $C_S$. In this manner all electrodes 20 are driven successively, all elements of one row being simultaneously provided with information *via* the column electrodes 21. Dependent on the presence or absence of a voltage across the capacitors $C_S$ and hence a voltage at the gate of $T_2$, the transistors $T_2$ become conductive. As a result of this a conductive connection is produced between the power electrode 26 and a picture element 24. Writing of information occurs by a voltage pulse on the common counter electrode 27, which pulse is negative with respect to the common power electrode 24. As a result of the conductive connection between the common power electrode 26 and the driven picture elements 24, said voltage comes across said picture element 24 and the common counter electrode 27 so that at the area of a driven picture element 24 a current starts flowing through the electrochromic material 25 and deposits a coloured film on the common counter electrode 27. Erasing the written picture elements occurs by means of a positive voltage pulse at the common counter electrode 27 after having made the transistors $T_2$ conductive by a positive voltage pulse at the strip-shaped row 20 and column electrodes 21.

Fig. 3 shows diagrammatically the connection of the TFT-circuits with the common power electrode. A power electrode 41 which is common for all picture elements is provided on the glass supporting plate 40. The layer 41 is manufactured from gold and has a thickness of 2.5 $\mu$m. An insulating layer 42 of aluminium oxide in a thickness of 1.0 $\mu$m is provided on the layer 41. The layer 41 has a number of apertures 43. The source 44 of each transistor $T_2$ (see Fig. 2) are provided in said apertures 43 by means of thin-film methods. By providing one common electrode 41 the resistance of said electrode is considerably reduced with respect to individual strip-shaped power electrodes. A strip-shaped electrode of, for example 1 mm width and 10 cm length with a resistance of approximately 10 Ohm/□ has an overall resistance of 1 kOhm. At the high current densities of, for example, $j = 10$ mA/cm$^2$ required for the electrochromic display effect, the voltage drop across a strip-shaped electrode is 5 V. By using one common electrode 41 which moreover can be made thick because no individual strip-shaped electrodes need also be etched, the resistance roughly is reduced by a factor 8. The voltage drop across, for example, a circular gold electrode with a thickness of 2.5 $\mu$m, a radius of 10 cm and a resistivity of $2.4 \times 10^{-6}$ Ohm.cm at a current density of $j = 10$ mA/cm$^2$ is approximately 2—3 mV. As a result of this a considerable improvement of the homogeneity of the contrast is obtained.

Fig. 4 is a block diagram for driving the display device according to the invention. Reference numeral 50 denotes the TFT matrix having M row electrodes and N column electrodes. The M row electrodes of the matrix 50 are connected to a row feeler 51 which is controlled by the control member 52. A row is driven for a time $t_1$ by the row feeler with a pulsatory signal of 6 to 10 V. The information I for one row which is stored in a register 53 is released after a pulsatory signal from the control member 52 and is presented to the N columns of the TFT-matrix 50 during the time $t_1$. After all M rows of the TFT-matrix have been driven, the writing means 54 are driven by the control member 52 by means of a pulsatory signal. The information of all rows stored in the TFT matrix 50 is now written in one time during a time $t_2$ by means of a voltage pulse of the writing means 54 of –2 to –3V at the common electrode 55. The overall time for driving and writing the information is $M \times t_1 + t_2$ sec. Erasing occurs by first providing all elements of the TFT-matrix with positive information and then erasing the written picture with a voltage pulse of +2 to +3 V at the common electrode 55. So for one cycle an overall time of $(M+1) \times t_1 + t_2$ sec is necessary.

## Claims

1. A display device comprising a display medium between two supporting plates, of which one supporting plate is provided with a matrix of picture elements, a matrix of strip-shaped row electrodes and strip-shaped column electrodes insulated from each other at the crossings, which row electrodes and column electrodes are situated between the rows and columns of the matrix of picture elements, and a matrix of thin-film transistor circuits, in which each circuit is formed by a first transistor, a second transistor and a capacitor, of which first transistor the gate is connected to the strip-shaped row electrode, the drain is connected to the strip-shaped column electrode and the source is connected to the gate of a second transistor, of which second transistor the drain is connected to a picture element, the gate is connected to a terminal of the capacitor and the source is connected to the other terminal of the capacitor, which source of the second transistor is furthermore connected to a power electrode, and the other supporting plate of which is provided with a counter electrode which is common for all picture elements, characterized in that the power electrode is formed by a conductive layer which is provided on said one supporting plate and has an insulating layer, and which is connected through apertures in the insulating layer to the source of the second transistor of each thin-film transistor circuit.

2. A display device as claimed in Claim 1, characterized in that the thickness of the conductive layer is between approximately 0.1 $\mu$m and 4 $\mu$m.

3. A display device as claimed in Claim 1 or 2, characterized in that the conductive layer is of Au and the insulating layer is of $Al_2O_3$.

4. A display device as claimed in Claim 1, 2 or 3, characterized in that the display medium is an electrochromic material, in particular a solution of a viologen salt.

5. A device for driving a display device claimed in any of the preceding Claims, which device comprises first means to drive a row of picture elements, second means to provide a driven row of picture elements with information third means to write the information and control means to energize the first, second and third means, characterized in that the control means energize the first and second means for all the rows of picture elements and then energize the third means for all rows in common.

**Revendications**

1. Dispositif d'affichage comportant un milieu d'affichage entre deux plaques de support dont une plaque de support est munie d'une matrice d'éléments d'image, d'une matrice d'électrodes de rangée en forme de bande et d'électrodes de colonne en forme de bande isolées les unes des autres aux points de croisement, lesdites électrodes de rangée et lesdites électrodes de colonne étant situées entre les rangées et les colonnes de la matrice d'éléments d'image, d'une matrice de circuits transistorisés à film mince, chaque circuit étant formé par un premier transistor un deuxième transistor et un condensateur, premier transistor dont la porte est connectée à une électrode de rangée en forme de bande, le drain à un électrode de colonne en forme de bande et la source à la porte du deuxième transistor, deuxième transistor dont le drain est connecté à un élément d'image, la porte à un pôle du condensateur et la source à l'autre pôle du condensateur, ladite source du deuxième transistor étant connectée en outre à une électrode d'alimentation d'énergie, et dont l'autre plaque de support est munie d'une contre-électrode commune à tous les éléments d'image, caractérisé en ce que l'électrode d'alimentation d'énergie est constituée par une couche conductrice appliquée sur une plaque de support et munie d'une couche isolante, couche qui est connectée par des ouvertures ménagées dans la couche isolante à la source du second transistor de chaque circuit de transistor à film mince.

2. Dispositif d'affichage selon la revendication 1, caractérisé en ce que l'épaisseur de la couche conductrice se situe entre environ 0,1 $\mu$m et 4 $\mu$m.

3. Dispositif d'affichage selon la revendication 1 ou 2, caractérisé en ce que la couche conductrice est en Au et la couche isolante est en $Al_2O_3$.

4. Dispositif d'affichage selon la refendication 1, 2 ou 3, caractérisé en ce que le milieu d'affichage est en matériau électrochrome, notamment une solution d'un sel viologène.

5. Dispositif pour l'adressage d'un dispositif d'affichage selon l'une des revendications précédentes, dispositif qui est muni de premiers moyens servant à l'adressage d'une rangée d'éléments d'image, de seconds moyens afin de munir une rangée adressée d'éléments d'image excités d'information, de troisièmes moyens pour enregistrer l'information et des moyens de commande pour l'excitation des premiers, deuxièmes et troisièmes moyens, caractérisé en ce que les moyens de commande excitent successivement les premiers et deuxièmes moyens pour toutes les rangées d'éléments d'image et excitent ensuite les troisièmes moyens en commun à toutes les rangées.

**Patentansprüche**

1. Anzeigevorrichtung mit einem Wiedergabemedium zwischen zwei Trägerplatten, von denen eine mit einer Matrix von Bildelementen ausgerüstet ist, die aus an den Kreuzungspunkten der voneinander isolierten streifenförmigen Zeilenelektroden und streifenförmigen Spaltenelektroden besteht, welche Zeilen- und Spaltenelektroden zwischen den Zeilen und Spalten der Matrix von Bildelementen und einer Matrix von Dünnfilm-Transistorschaltungen liegen, wobei eine jede Schaltung von einem ersten Transistor, einem zweiten Transistor und einem Kondensator gebildet wird, wobei das Gate dieses ersten Transistors mit der streifenförmigen Zeilenelektrode, der Drain mit der streifenförmigen Spaltenelektrode und die Source mit dem Gate eines zweiten Transistors verbunden sind, dessen Drain mit einem Bildelement, dessen Gate mit einem Pol des Kondensators und dessen Source mit dem anderen Pol des Kondensators verbunden ist, und diese Source des zweiten Transistors weiter mit einer Energiezuführungselektrode verbunden ist, und von den erwähnten zwei Trägerplatten die andere mit einer für alle Bildelemente gemeinsamen Gegenelektrode versehen ist, dadurch gekennzeichnet, dass die Energiezuführungselektrode von einer auf der einen Trägerplatte angebrachten, mit einer Isolierschicht versehenen Leitschicht gebildet wird, die durch Oeffnungen in der Isolierschicht mit der Source des zweiten Transistors einer jeden Dünnfilm-Transistorschaltung verbunden ist.

2. Anzeigevorrichtung nach Anspruch 1, dadurch gekennzeichnet, dass die Leitschichtdicke zwischen etwa 0,1 $\mu$m und 4 $\mu$m liegt.

3. Anzeigevorrichtung nach Anspruch 1 oder 2, dadurch gekennzeichnet dass die Leitschicht aus Au und die Isolierschicht aus $Al_2O_3$ besteht.

4. Anzeigevorrichtung nach Anspruch 1, 2 oder 3, dadurch gekennzeichnet, dass das

Wiedergabemedium ein elektrochromer Werkstoff und insbesondere eine Lösung eines Viologensalzes ist.

5. Anordnung zum Ansteuern einer Anzeigevorrichtung nach einem der vorangehenden Ansprüche, welche Vorrichtung mit ersten Mitteln zum Ansteuern einer Zeile von Bildelementen, mit zweiten Mitteln zum Senden von Informationen zu einer angesteuerten Zeile von Bildelementen, mit dritten Mitteln zum Einschreiben der Informationen und mit Steuermitteln zum Erregen der ersten, zweiten und dritten Mitteln versehen ist, dadurch gekennzeichnet, dass die Steuermittel für alle Zeilen von Bildelementen die ersten und die zweiten Mittel erregen und anschliessend für alle Zeilen gemeinsam die dritten Mittel erregen.

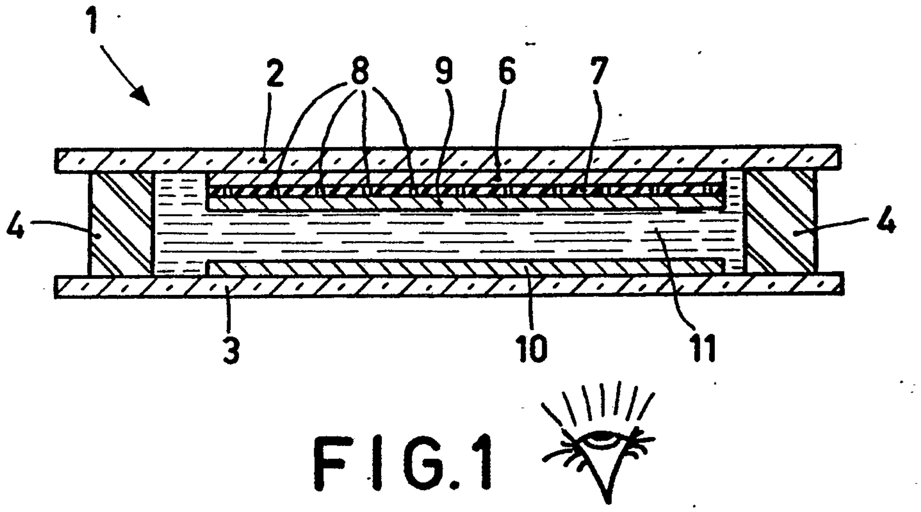
1
2
8
9
6
7
4
4
3
10
11

FIG.1

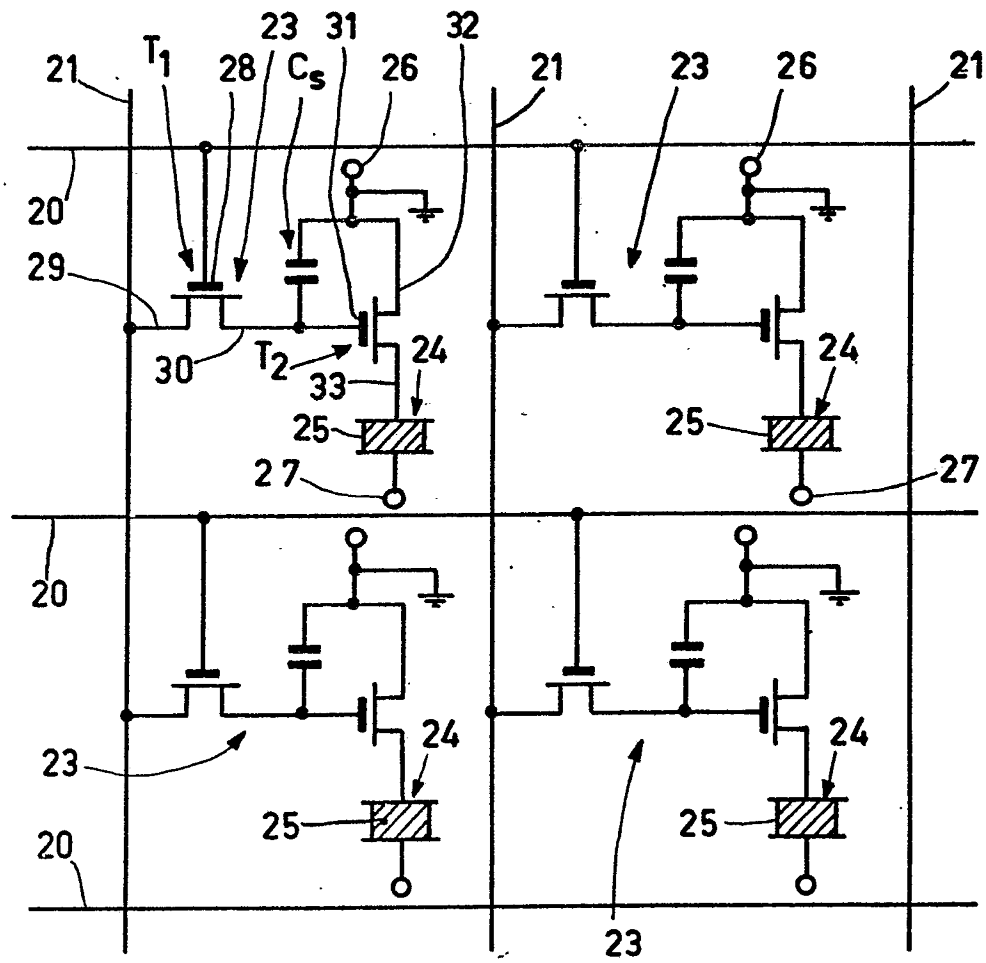
21
T1
28
23
Cs
31
26
32
21
23
26
21
20
29
30
T2
33
24
25
27
24
25
27
20
23
24
25
20
24
25
23

FIG.2

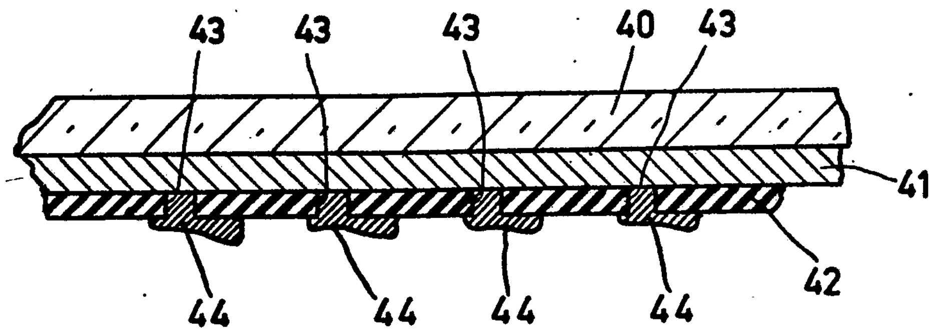


FIG. 3

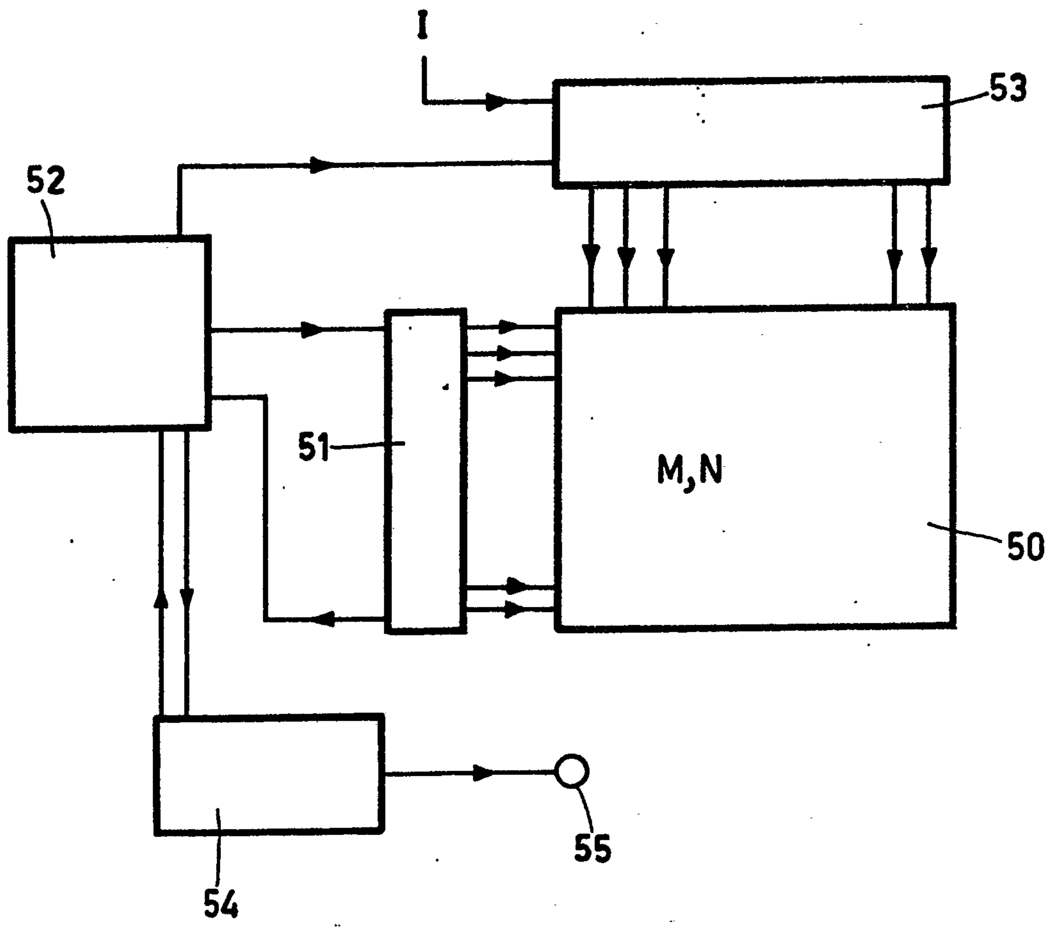


FIG. 4